# FASCICULE DE BREVET EUROPEEN

(11) **EP 1 064 656 B1**
(45) Date de publication et mention de la délivrance du brevet: **04.08.2004**
(21) Numéro de dépôt: 99906410.8
(22) Date de dépôt: 17.03.1999
(51) Int. Cl.: H01B 1/12, C25D 5/56, C08J 9/40

(54) **STRUCTURES POREUSES COMPLEXES EPAISSES RENDUES ELECTRIQUEMENT CONDUCTRICES, ET PROCEDE D'ACTIVATION CONDUCTRICE CORRESPONDANT**
ELEKTRISCHE LEITENDE PORÖSE STRUKTUR, UND VERFAHREN ZUM AKTIVIEREN
THICK COMPLEX POROUS STRUCTURES MADE ELECTRICALLY CONDUCTIVE, AND CORRESPONDING METHOD FOR CONDUCTIVE ACTIVATION

(30) Priorité: 19.03.1998 FR 9803375
(43) Date de publication de la demande: 03.01.2001
(73) Titulaire: S.C.P.S. Société de Conseil et de Prospective Scientifique S.A., 93110 Rosny-sous-Bois (FR)
(72) Inventeur: BUGNET, Bernard, F-94420 Le Plessis-Trevise (FR); DONIAT, Denis, F-75116 Paris (FR)
(74) Mandataire: Moinas, Michel
(86) Numéro de dépôt international: PCT/IB1999/000452
(87) Numéro de publication internationale: WO 1999/048108

(56) Documents cités:
- EP-A- 0 761 710
- US-A- 5 523 119
- US-A- 5 591 482

## Description

L'invention concerne, dans sa forme générale, le domaine de la fabrication de structures poreuses complexes électriquement conductrices, éventuellement métallisées ou métalliques.

L'invention est plus particulièrement relative au domaine de la fabrication de structures complexes à haute porosité, éventuellement métallisées ou métalliques pour application à titre d'électrodes pour électrolyse d'effluents liquides, de détecteur et piège de molécules organiques ou biologiques, de supports d'électrodes pour générateurs électrochimiques, de supports de catalyse, de media filtrants, d'isolants phoniques, de structures de protection électromagnétique et nucléaire, et antistatiques, d'échangeurs thermiques, ou autres.

Les structures métalliques ou métallisées selon l'invention sont de types mousse, feutre ou tissé à haut niveau de porosité ouverte, offrant l'aspect d'un réseau dense de fibres ou mailles à ossature tridimensionnelle, définissant une pluralité d'espaces ouverts en communication les uns avec les autres et avec l'extérieur des structures.

Les mousses sont des structures alvéolaires réticulées de grande porosité (supérieure à 80%, et pouvant atteindre environ 98%) et à porosité ouverte par désoperculation, dans lesquelles les mailles du réseau communiquent entre elles en totalité, ou pour le moins dans des proportions importantes.

Les feutres sont des enchevêtrement aléatoires de fibres non tissées (cependant pour l'essentiel d'entre elles positionnées sensiblement dans le plan de la " nappe " constituée), définissant entre elles des espaces inter-fibres de formes et dimensions variables, communicant entre eux. Leurs fibres peuvent être ou non collées par un agent liant.

Les tissés sont des structures constituées par assemblage de fils ou fibres textiles entrelacés, soit tissés soit maillés. Ils peuvent se présenter sous la forme de structures épaisses et complexes, notamment lorsqu'ils sont constitués de deux faces tissées externes reliées par tricotage de fils qui les maintiennent espacées et interconnectées à la fois, comme permettent par exemple de le réaliser les métiers à tisser de type Raschel.

Ces diverses structures poreuses complexes, que l'on peut destiner selon l'invention à être métallisées dans toute leur épaisseur, sur l'ensemble de leur surface développée, sans colmatage de leur porosité, peuvent être approvisionnées en divers matériaux de base.

Pour les mousses, il s'agit de matières organiques, minérales ou synthétiques, et en particulier de polymères tels que du polyamide, du polyuréthanne (polyester ou polyéther), ou du polypropylène.

Pour les feutres et tissés, il s'agit également de matières organiques, minérales ou synthétiques, telles que les polymères précédemment cités, des fibres de verre, de roche ou de carbone, ou des fibres naturelles telles que coton, laine ou similaire.

Diverses procédures conduisant à la métallisation de telles structures ont déjà été proposées, parmi lesquelles:
- dépôt chimique de métal, suivi d'un ou plusieurs dépôts électrochimiques,
- dépôt de particules de carbone ou graphite, notamment sous forme de laque ou peinture conductrice, suivi d'un ou plusieurs dépôts électrochimiques,
- dépôt métallique sous vide, notamment par pulvérisation cathodique, diffusion gazeuse ou dépôt ionique, suivi d'un ou plusieurs dépôts électrochimiques,
- dépôt par décomposition thermique d'un composé métallique en phase vapeur,
- dépôt chimique de polymère conducteur, suivi d'un ou plusieurs dépôts électrochimiques de métal.

Dans tous les cas où l'on entend procéder à un ou plusieurs dépôts électrochimiques, il convient préalablement de sensibiliser, c'est à dire rendre électriquement conductrice, la surface que l'on veut métalliser par voie galvanique. C'est la fonction de l'étape de " l'activation conductrice " qui apparaît dans la plupart des procédés cités (dépôt chimique de métal ou de polymères, dépôt de particules de carbone, dépôt sous vide).

Selon les procédures également décrites ci-dessus en vue de la réalisation d'un ou plusieurs dépôts électrolytiques, les procédés d'activation - et cela constitue une de leurs limitations majeures - ne permettent de rendre conductrices les structures poreuses complexes que l'on souhaite ensuite métalliser, que sous la forme de feuilles (ou bandes) d'épaisseurs réduites, qui doivent être transportées et défiler à travers une ou plusieurs cuves de traitement (bains chimiques, bains de laque de carbone, enceintes de dépôt sous vide).

Les dépôts chimiques de métal et de polymères conducteurs, et le dépôt de particules de carbone ou graphite, sont ainsi opérés au défilé lorsque l'on veut travailler à échelle industrielle, par déroulement de rouleaux de bandes de mousse, feutre ou tissé, et défilement de celles-ci dans une succession de bains de traitement, puis ré-enroulement en sortie de ligne d'activation.

De manière comparable, l'activation par dépôt métallique sous vide selon la technique de pulvérisation cathodique, se pratique au déroulé, par défilement devant des magnétrons, de manière semi-continue, entre un rouleau d'entrée et un rouleau de sortie.

Ce sont donc toujours des produits en couche fine (feuilles ou bandes) qui sont activés. Ces couches fines sont limitées à des épaisseurs de l'ordre du millimètre ou de quelques millimètres, selon la porosité du produit traité, la dimension de ses pores ou interstices, et le pouvoir de pénétration du procédé d'activation.

Des mousses de qualité dite " 100 ppI " (100 pores par inch linéaire), c'est à dire présentant environ 40 pores par centimètre linéaire en surface, ne peuvent être activées industriellement de manière satisfaisante qu'en épaisseurs inférieures à environ 5 millimètres par les dépôts chimiques et sous vide, en épaisseurs inférieures à environ 3 millimètres par dépôt de poudre de carbone ou graphite.

La présente invention s'attache tout spécialement à la mise en oeuvre d'un procédé nouveau d'activation conductrice, évolution innovante du procédé de dépôt chimique continu de polymère conducteur décrit dans la demande de brevet française n° 95.09547 du 4 août 1995, permettant de réaliser l'activation conductrice de haute performance de structures poreuses complexes traitées non plus limitativement en fines bandes, mais en épaisseurs pouvant atteindre plusieurs centimètres ou dizaines de centimètres.

Ce procédé apporte de manière évidente, comme on s'attachera à le démontrer, divers avantages par rapport aux techniques antérieures, et permet d'effectuer le traitement de " blocs " de produits.

Selon l'invention décrite dans la demande de brevet française n° 95.09547 du 4 août 1995, l'activation conductrice est opérée par dépôt chimique d'un polymère conducteur.

La couche de polymère conducteur est obtenue par polymérisation d'un monomère déposé (greffé) sur les fibres ou mailles du substrat à traiter. Cette polymérisation est effectuée par oxydation-dopage du monomère. Celui-ci peut notamment être du pyrrole, du furane, de l'aniline, du thiophène ou certains de leurs dérivés, et notamment les monomères fonctionnalisés.

Selon cette invention, les structures poreuses complexes en couche fine, préalablement à leur métallisation électrochimique, subissent un traitement d'activation conductrice organisé comme suit :
1. pré-traitement oxydant de la structure de base,
2. rinçage, éventuellement complété par un égouttage-séchage
3. dépôt, à la surface des fibres ou mailles de la structure, d'un monomère dont une forme polymérisée est conductrice de l'électricité,
4. égouttage, rinçage et séchage éventuels de la structure,
5. oxydation-dopage de polymérisation du monomère précédemment déposé,
6. rinçage, et éventuel égouttage,
7. séchage éventuel de la structure.

On se reportera avantageusement au document 95.09547 pour toutes explications et justifications du rôle de chacune des étapes ci-dessus.

Pour un fonctionnement en continu, de type industriel, le traitement des structures est effectué au défilé, la bande de mousse, feutre ou tissé d'un rouleau d'entrée se déroulant dans une succession de cuves contenant les solutions de traitements des étapes 1, 3 et 5, entre et à la suite desquelles sont effectuées les opérations annexes 2, 4, 6 et 7. La bande, entraînée mécaniquement à travers cette chaîne de traitements, est ré-enroulée en sortie, et alors prête à subir le ou les dépôts électrolytiques de métallisation. C'est le produit à traiter qui est véhiculé d'un bain à l'autre.

La présente invention concerne une mise en oeuvre originale, et une amélioration significative du procédé d'activation conductrice par dépôt de polymère conducteur, décrit dans le document 95.09547.

La présente invention a été élaborée afin d'apporter une réponse satisfaisante et nouvelle aux problèmes pratiques de traitement posés par les activations conductrices au défilé de structures poreuses complexes, au besoin croissant de réalisation - pour des applications diverses - de ces produits en épaisseurs accrues, et enfin avec le souci d'une réduction renforcée des coûts de traitement industriel.

Selon la présente invention, l'activation conductrice est réalisée par dépôt chimique de polymère conducteur.

Ce procédé est choisi pour les principales raisons suivantes :
- haut potentiel de pénétration du traitement (par voie liquide) au sein de structures poreuses complexes en couches épaisses, sous réserve de mise en oeuvre de conditions opératoires adéquates;
- excellent potentiel de haut niveau de conductivité (et de continuité de la couche conductrice) du produit après traitement d'activation, sous réserve de mise en oeuvre de conditions opératoires adéquates;
- grand potentiel d'économie, de sécurité et de reproductibilité du procédé, sous réserve de mise en oeuvre de conditions opératoires adéquates;
- fort potentiel de stabilité du traitement d'activation, en stockage et lors de l'électrolyse ultérieure, sous réserve de mise en oeuvre de conditions opératoires adéquates.

La mise en oeuvre du procédé au défilé décrit dans le document 95.09547, permet d'obtenir des feuilles de structures poreuses complexes telles que mousses, feutres et tissés tridimensionnels présentant, après activation, des valeurs de résistances de quelques centaines, voire quelques dizaines d'Ohms-carré. Les produits ainsi activés en couches fines peuvent, par exemple, recevoir un dépôt électrolytique de nickel en bain de Watts ou en bain de type sulfamate sous des tensions inférieures et / ou avec des vitesses de dépôts supérieures, à celles qu'il est possible de réaliser, toutes choses égales par ailleurs, sur des produits activés par dépôt de carbone ou graphite, ou par dépôt de nickel sous vide (réalisé selon le brevet français 84.01110 du 25 janvier 1984). Ceci résulte de leur haut niveau de conductivité, ainsi que de la continuité et de la stabilité du dépôt conducteur.

Cependant, comme tous les procédés d'activation conductrice pratiqués au défilé, le traitement aux polymères conducteurs peut rencontrer, pour un développement industriel à grande échelle, des problèmes d'ordre mécanique. Il s'agit de difficultés liées à l'entraînement et au défilement de structures souples, déformables, en bandes fines et larges, appelées à subir des tensions de traction susceptibles de les déformer, voire de conduire à leur rupture. Cela est particulièrement critique pour les structures de type mousse, qui sont le plus souvent en polyuréthanne, et présentent des caractéristiques mécaniques de grande fragilité.

Toutes les mises en oeuvre industrielles d'activation conductrice de mousses ou structures fibreuses ont à ce jour été opérées, pour des questions économiques, en continu ou semi-continu.

Cela concerne aussi bien les procédés chimiques de dépôt métallique ou de polymères, que le dépôt de poudres de carbone ou graphite sous forme de laque ou " peinture " (tous pratiqués en continus), et qu'enfin le dépôt physique sous vide opéré par pulvérisation cathodique (en semi-continu).

Les installations d'activation en continu, quel que soit le procédé choisi, se présentent sous la forme d'une succession appropriée de cuves de traitements et de dispositifs de rinçages et séchages, au travers desquels la bande de structure à traiter doit défiler, en étant entraînée par des rouleaux transporteurs moteurs et / ou non moteurs, immergés dans les solutions et / ou émergés.

Au cours du circuit plus ou moins complexe qu'elle doit ainsi suivre, la bande subit des tractions et tensions variables selon les emplacements successifs par lesquels elle transite. L'homme de l'art comprendra par exemple aisément que ces tensions ne soient pas les mêmes dans les zones où la structure est sèche et dans celles où elle est imprégnée de l'une ou l'autre des solutions de traitement, lorsqu'elle est entraînée au sein d'un bain ou lorsqu'elle défile à l'air, lorsqu'elle est verticale ou horizontale, lorsqu'elle est à température ambiante ou à des températures plus élevées.

De multiples précautions doivent être prises afin de tenter, dans la mesure du possible, d'homogénéiser ces tensions, mais des déformations ou ruptures de la bande sont fréquemment observées. On remarque notamment des étirements conduisant à des rétrécissements de la largeur de la bande traitée, et de la même manière à des déformations, pour les mousses, des pores qui d'une forme pratiquement sphérique évoluent vers des formes oblongues. L'épaisseur de la bande se trouve donc elle aussi affectée par le traitement, en perdant de son homogénéité.

Ces déformations dans la largeur et l'épaisseur de la bande de produit peuvent contraindre à des opérations correctives complémentaires de découpe et de calandrage qui correspondent alors à des coûts et / ou pertes de produits.

Un autre problème d'ordre mécanique, lié au fonctionnement au défilé, tient au guidage de la bande. Celle-ci a naturellement tendance à dévier par rapport à l'axe du défilement. On peut observer des phénomènes de vrillage de la bande, les déformations et les déplacements anormaux pouvant conduire à l'apparition de plis et froissages divers, et ici encore à des ruptures, ou à une activation non homogène de la bande.

Des aides au guidage de la bande sont notamment recherchées à travers des configurations non exactement cylindriques des rouleaux d'entraînement et une certaine mobilité des axes de ceux-ci. Ces ajustements constituent bien évidemment un facteur de complexité des installations fonctionnant au défilé, et corrélativement d'accroissement de coût. Ils apportent également un élément d'affaiblissement de l'homogénéité, de la reproductibilité, et de la fiabilité du traitement. Ils imposent un niveau de surveillance coûteux, qu'il soit humain ou automatisé.

Les problèmes évoqués ci-dessus s'amplifient évidemment tant avec l'augmentation de largeur des bandes traitées qu'avec celle de la vitesse de défilement, tous paramètres qu'une industrialisation rationnelle tend pourtant à accroître. Un passage du stade pilote au stade industriel, amène ainsi à passer de largeurs de 20 à 30 centimètres à des largeurs de un à deux mètres, de vitesses de défilement de quelques mètres / heure à quelques dizaines de mètres / heure.

La présente invention s'est attachée principalement à rendre économiquement viable à l'échelle industrielle, une mise en oeuvre du procédé d'activation conductrice par dépôt de polymères conducteurs, qui ne soit pas du type " au défilé " et permette d'échapper aux difficultés pratiques décrites ci-dessus.

Elle a également eu pour objectif de rendre possible et économiquement viable à l'échelle industrielle, une mise en oeuvre du procédé d'activation conductrice par dépôt de polymères conducteurs, qui permette d'effectuer le traitement des structures poreuses complexes non plus en fine couche, mais aussi, pour la première fois, en grandes épaisseurs, ce qui présente un caractère particulièrement intéressant pour les structures de type mousse.

Elle permet le traitement de rouleaux de mousse, feutre, ou tissé, sans qu'il soit besoin de les dérouler. Plus encore, elle autorise le traitement de blocs de mousse.

Selon l'invention, ce sont les solutions de traitement qui sont apportées au travers de la structure, et non plus celle-ci qui doit défiler successivement à travers chaque bain ou dispositif annexe (tel par exemple que douche de rinçage ou soufflerie de séchage).

Le traitement d'activation conductrice s'opère ainsi, selon la présente invention, par imprégnation complète du rouleau ou bloc de structure poreuse à traiter, par les différentes solutions, injectées au sein de la masse de structure poreuse, et mises en oeuvre pour réaliser:
- le pré-traitement oxydant,
- le dépôt, ou greffage, de monomère,
- l'oxydation-dopage de polymérisation du monomère.

Les étapes intermédiaires d'égouttages, rinçages, séchages sont également réalisées à travers l'ensemble du rouleau (sans déroulage) ou du bloc.

Le traitement de volumes importants des structures complexes à haute porosité, sans défilement sous la forme de bandes, feuilles ou rubans fins, a imposé, dans le cadre de la présente invention, diverses adaptations du procédé décrit dans le document 95.09547.

Ainsi, la première étape de pré-traitement oxydant de la structure de base, qui était avantageusement réalisée, pour une mousse de polyuréthanne sur laquelle déposer du pyrrole, au moyen d'une solution aqueuse de KMnO₄ de concentration 20g/titre, à des températures de l'ordre de 70°C pour l'obtention de temps de passage courts (environ 4 minutes), est réaménagée selon l'invention, afin de favoriser un traitement homogène adapté à un passage de la solution à travers tout le volume du produit. Cet objectif est préférentiellement atteint par un temps d'immersion du produit dans la solution qui puisse être de l'ordre de 7 à 15 minutes (temps de remplissage et d'égouttage de la structure inclus), et une température du bain abaissée aux environs de 20 à 35°C, pour que l'attaque recherchée de la surface des fibres ou brins de la structure soit comparable, sans dégradation de ladite structure.

Pour le dépôt de monomère (greffage), et dans le cas du pyrrole, il est possible de retenir la formulation et les conditions de température et durée de traitement décrites dans le document 95.09547. Mais il a été montré, dans la cadre de la présente invention, qu'une formulation différente pouvait être adoptée, pour des raisons d'économie de procédé.

Le document 95.09547 proposait d'éviter, pour un souci de sécurité, l'utilisation du solvant traditionnel du pyrrole, le benzène, et d'utiliser une solution du type: 1
80 cc / litre de pyrrole
120 cc / litre d'isopropanol
800 cc / litre d'eau

Selon la présente invention, il est avantageux, afin de faire l'économie de l'isopropanol, de réaliser une solution alcaline de dépôt de type pyrrole - eau - potasse, présentant un pH supérieur à 10, et notamment de l'ordre de 13,5, et utilisée préférentiellement à une température située entre 12 et 25°C.

Une telle solution, qui permet la dissolution du pyrrole, est agressive pour la plupart des structures à traiter, et tout particulièrement pour les mousses de polyuréthanne. Son utilisation dans le cadre d'un processus d'activation au défilé pratiqué sur des bandes de mousse, fragilise la structure, qui perd provisoirement sa " tenue " mécanique et est alors particulièrement sujette à déformations et ruptures. Elle peut, par contre, être mise en oeuvre lorsque les structures traitées demeurent en blocs ou rouleaux non déroulés.

Selon l'invention, l'étape de dépôt de pyrrole, dans une telle solution, peut être effectuée en des temps compris avantageusement entre 5 et 15 minutes. Appliquée à des mousses de polyuréthanne, on peut noter qu'au delà de 5 minutes d'immersion, la durée de réaction importe peu sur le résultat final de l'activation.

L'étape d'oxydation-dopage de polymérisation du monomère peut être conduite dans les conditions décrites par le document 95.09547, à titre d'exemple, pour la polymérisation du pyrrole.

Pour ce qui est des étapes intermédiaires d'égouttages, rinçages et séchages, on a montré dans le cadre de la présente invention, qu'elles pouvaient être menées directement à travers les rouleaux (sans déroulement) ou les blocs de structures poreuses. Elles sont conduites afin de limiter les pertes et entraînements de solutions de traitement.

A titre d'exemple non limitatif de l'invention, on décrira ci-après la réalisation complète, selon un mode préférentiel de mise en oeuvre de l'invention, d'un traitement d'activation conductrice par dépôt de polymère conducteur, puis de métallisation électrochimique d'une structure poreuse complexe.

La structure que l'on souhaite activer est une mousse de polyuréthanne de qualité dite " ppI 100 ", désoperculée, dont la densité est de l'ordre de 30 kg/m³.

L'étape de pré-traitement oxydant est réalisée par immersion d'un bloc de mousse, de dimensions 100 x 50 x 50 centimètres, durant 15 minutes dans une solution aqueuse de permanganate de potassium (KMnO₄), de concentration 20 g/litre, de pH sensiblement égal à 8. La température de la solution est située entre 25 et 35°C.

L'utilisation de cette solution de pré-traitement offre l'avantage de conduire à la formation, à la surface des mailles de la mousse, d'une couche de bioxyde de manganèse (MnO₂). Lorsque sera ultérieurement réalisée le greffage du monomère, le MnO₂ passera, au moins partiellement, à son contact, à un état inférieur d'oxydation, provoquant par là même l'oxydation, et donc la polymérisation, du monomère par sa face inférieure.

Une étape de rinçage est ensuite réalisée, après une premier égouttage, par immersion du bloc de mousse dans un bain mort d'eau de ville, puis par douchage du bloc, également à l'eau de ville.

La mousse est à nouveau égouttée quelques instants, et préférentiellement séchée sous air chaud.

L'étape de greffage de monomère est effectuée par immersion du bloc de mousse dans une solution de pyrrole (C₄H₅N) dans un mélange potasse-eau.

La composition utilisée dans l'exemple est la suivante :
50 cc / litre de pyrrole
28 g / litre de potasse
950 cc / litre d'eau

Cette solution alcaline, de concentration 0,5N en potasse, présente un pH d'environ 13,5.

La température retenue pour la solution est préférentiellement située, pour la réalisation selon l'exemple, entre 15 et 20°C.

La durée d'immersion de la mousse est de 5 à 10 minutes.

La quantité de pyrrole déposée au terme de cette étape est de quelques kilogrammes par mètre-cube et, dans le présent exemple, de 3 kg/m³.

Il est ensuite procédé à un égouttage de la mousse, très important à ce stade afin de limiter les pertes en solution et plus particulièrement en pyrrole, durant un temps de une à deux minutes environ. Cet égouttage peut être avantageusement favorisé par une agitation du bloc de mousse et / ou par le soufflage d'air à travers celui-ci.

L'étape de polymérisation du pyrrole en polypyrrole est effectuée par immersion du bloc de mousse dans une solution aqueuse oxydante-dopante de composition suivante :
- 50 g / litre de chlorure ferrique
- 50 cc / litre d'acide fluoroborique à 34%

La température de la solution est avantageusement d'environ 20°C, et la durée du traitement de polymérisation de 15 à 20 minutes.

Il est procédé ensuite à un rinçage du bloc de mousse par immersion en bain mort d'eau de ville, puis à un second rinçage en bain mort d'eau permutée, avant un séchage qui peut être pratiqué par soufflage d'air chaud.

Après activation conductrice, la mesure de résistance de la mousse donne des valeurs comprises entre 10 et 50 Ω-carré, aussi bien en surface du bloc que sur toute section pratiquée en son sein.

Il est alors possible de procéder à la découpe du bloc de mousse pour l'obtention des formes désirées, qui peuvent être de tous types; et notamment feuilles, bandes ou rubans par pelage du bloc, formes prismatiques ou cylindriques diverses, manchons, ..., adaptés à l'utilisation visée.

On notera que la possibilité offerte par l'invention de ne procéder à la mise en forme des structures traitées de type mousse qu'après leur activation conductrice et non avant comme cela a toujours été le cas jusque là, offre divers avantages d'importance.

Lors des diverses étapes de l'activation, la structure traitée subit des contraintes que l'on a déjà évoquées, et notamment lors du dépôt de monomère, une perte significative de sa tenue mécanique.

Lorsque l'on opère l'activation, selon l'invention, sur des rouleaux non déroulés, donc compacts, ou plus encore sur des blocs de structures poreuses, l'effet de cette perte de tenue est largement atténué par l'immobilité du produit qui demeure sous une forme dense et massive au lieu de devoir circuler en ruban de fine épaisseur.

Les structures traitées en rouleaux compacts ou en blocs peuvent cependant subir des déformations limitées de leur volume. Ces déformations sont généralement les plus marquées avec les mousses de polyuréthanne. Le traitement sous forme de blocs apporte de ce point de vue une réponse particulièrement intéressante au problème des déformations.

En effet, non seulement la tenue de la mousse reste supérieure en bloc à ce qu'elle peut être en feuille ou tranche fine, ce qui est aisément compréhensible pour une structure alvéolaire, mais les déformations que l'on peut continuer à observer perdent de leur importance au niveau du produit fini.

Si la mousse est découpée en bandes fines (à titre d'exemple de 1 à 3 mm environ pour l'application aux supports d'électrodes pour accumulateurs), et ce avant activation, les déformations et irrégularités induites de largeur et d'épaisseur se retrouvent de manière mesurable sur le produit activé puis sur le produit fini, c'est à dire après métallisation.

Lorsque l'activation conductrice est réalisée sur un bloc de mousse, et que celui-ci n'est découpé en rouleau de bande de 1 à 3 mm d'épaisseur qu'après que la structure ait été rendue conductrice, cette découpe postérieure à l'activation permettra aisément d'obtenir une bande d'épaisseur et de largeur parfaitement régulières. Ces effets de déformation peuvent ainsi être " effacés ".

Par ailleurs, et ceci que les structures soient traitées en rouleaux ou en blocs, l'invention permet de réaliser une amélioration significative et particulièrement recherchée pour diverses applications, d'homogénéité du produit fini, lorsque l'on veut faire suivre l'activation d'une métallisation électrolytique.

L'activation selon l'invention permet d'éviter ou de limiter les problèmes bien connus des galvanoplastes et liés au phénomène de " bourgeonnement " ou " effet de pointe " du dépôt métallique en surface de la structure à revêtir.

Il est en effet connu de l'homme de l'art que lors de l'électrolyse d'une surface non lisse et plane placée en cathode d'une cuve de galvanoplastie, le dépôt métallique s'effectue préférentiellement sur les zones de la surface traitée qui sont les plus proches de la ou des anodes. Dans le cas de structures très complexes, comme les mousses, cette caractéristique électrochimique conduit à un " bourgeonnement " du dépôt métallique sur les pointes des mailles qui saillent en surface. Ces pointes saillantes agissent comme ce que les spécialistes appellent des " mangeurs de courant ". Elles concentrent les dépôts au détriment des zones de la structure qui se trouvent être les plus éloignées des anodes, c'est à dire dans le cas où la structure est située entre deux anodes, au détriment des parties centrales de la structure. Il y a ainsi toujours un différentiel d'épaisseurs des dépôts métalliques réalisés entre les parties externes et les zones internes d'une structure complexe tridimensionnelle métallisée par galvanoplastie. Il importe par contre dans la majeure partie des cas d'applications, que l'électrolyse soit effectuée dans des conditions qui minimisent ce phénomène, afin que le ratio d'épaisseurs de dépôt entre le coeur et les faces soit le plus proche possible de 1. Ce ratio, en matière de mousses métalliques ou métallisées est couramment appelé par les fabricants et utilisateurs le " D.T.R. " (Differential Thickness Ratio).

Pour l'obtention de valeurs basses de ce ratio, il est donc intéressant et judicieux que la structure puisse présenter, avant électrolyse, une moindre conductivité sur les pointes de mailles qui saillent en surface qu'en tout autre point. Ceci permet de limiter le phénomène et la formation des " mangeurs de courant ".

La présente invention, par le traitement opéré directement à travers des rouleaux de mousse, feutre ou tissé, ou à travers des blocs de mousse, apporte une réponse appropriée et économique à la résolution de ce problème.

Lorsque l'activation est pratiquée sur un rouleau, constitué par l'enroulement sur elle-même d'une bande (mousse, feutre ou tissé), les parties des fils, fibres ou mailles qui saillent en surfaces de la bande, sont plaquées contre les parties correspondantes des fils, fibres ou mailles qui saillent en surfaces des tronçons de bandes adjacentes. Ce sont ces points qui, activés, pourraient constituer l'essentiels des mangeurs de courant, en phase d'électrolyse. Or, le fait que ces points soient plaqués entre eux, les protègent au moins en partie du dépôt de monomère et de l'oxydation-dopage de celui-ci en polymère conducteur. Cette situation avantageuse apparaît à l'évidence lorsque, après activation, l'on déroule la bande constituant le rouleau traité. On observe alors une légère adhérence entre les spires de la bande, adhérence qui se rompt sans dégradation de la bande, mais qui témoigne que le dépôt conducteur reliait entre elles les zones de contact des brins ou mailles plaquées contre celles des spires superposées. La rupture de ce contact met le plus souvent à nu, c'est à dire sans activation ou avec une conductivité réduite, ce qui va constituer les pointes saillantes en surface de la bande.

Dans le cas où l'activation est opérée à travers un bloc de mousse, le résultat en matière d'élimination des pointes mangeurs de courant est encore plus manifeste.

En effet, ce n'est qu'après activation du bloc à travers tout son volume, que celui-ci est " pelé " pour obtention d'une bande (ou taillé en toute autre forme) de l'épaisseur choisie. La découpe de l'opération de pelage va mettre à nu des tranches de mailles, qui affleureront à la surface de la structure découpée et présenteront une face de polyuréthanne (ou autre matériau constitutif du substrat d'origine), en tout état de cause non revêtue de polymère conducteur.

Des tests de métallisation électrolytique comparatifs ont été conduits dans des conditions d'électrolyse identiques, sur des feuilles de mousses activées au polypyrrole, les unes activées directement sous forme de feuilles de l'épaisseur voulue pour l'électrolyse, les autres activées en blocs et découpées en feuilles après l'activation.

Ces essais ont été réalisés :
- sur deux types de mousses de polyuréthanne de types ppI 100 et ppI 80 (respectivement 40 et 30 pores par centimètre linéaire),
- sur des feuilles de deux épaisseurs différentes, à savoir 1,7 mm et 5,0 mm,
- et enfin par électrolyse de cuivre d'une part, et de nickel d'autre part.

Dans tous les cas, il est apparu que l'effet de bourgeonnement, très marqué au niveau des pointes de mailles saillantes en surface des feuilles activées en cette forme, était fortement réduit, voire éliminé, sur les feuilles découpées après activation de blocs de mousse.

La non accumulation locale en surface de dépôts métalliques sur ces pointes (bourgeonnement), permet au dépôt galvanique de s'effectuer à travers la structure dans de meilleures conditions d'homogénéité, et de tendre par conséquent vers un ratio d'épaisseurs du dépôt métallique entre coeur et surface qui se rapproche de 1.

On a pu constater au terme des essais d'électrolyse, que pour des dépôts de cuivre ou nickel de quelques centaines de grammes par mètre-carré de surface apparente de la feuille de mousse, les tranches de mailles non activées étaient cependant progressivement revêtues de métal, le dépôt gagnant sur ces surfaces par effet de proximité. Les mailles peuvent donc être intégralement revêtues en métal.

Les structures poreuses complexes selon l'invention peuvent être, de manière non limitative de l'invention, métallisées par dépôts de cuivre, nickel, fer, chrome, zinc, aluminium, plomb, étain, or, platine ou tout autre métal de la mine du platine, ou par dépôts d'alliages, mélanges ou superpositions de deux quelconques au moins de ces métaux.

Les structures poreuses complexes métallisées selon l'invention, peuvent faire l'objet ou non, après métallisation(s), d'un traitement thermique de brûlage des matières organiques d'origine et ajoutées durant l'activation, et d'un traitement thermique du (des) dépôt(s) métallique(s) sous atmosphère contrôlée.

Les structures activées selon l'invention peuvent être utilisées en tant que telles, sans subir de métallisation ultérieure. Ces structures rendues conductrices par le dépôt de polymère conducteur peuvent notamment trouver des applications diverses dans les domaines de la protection électromagnétique, de la protection antistatique, de l'échange thermique, ou de la détection et du piégeage de molécules organiques ou biologiques, etc.

Ces utilisations sont favorisées par la possibilité selon l'invention de préparer ces structures dans des formes variées. Elles le sont également selon l'invention par la qualité du dépôt conducteur réalisé, et notamment par sa stabilité, en milieu sec ou humide, neutre ou acide.

Naturellement, et comme il résulte d'ailleurs largement de ce qui précède, l'invention n'est pas limitée aux modes de réalisation particuliers qui ont été décrits à titre d'exemples.

L'invention ne se limite pas aux exemples qui ont été donnés, mais en embrasse toutes les variantes.

## Revendications

1. Procédé de dépôt chimique de polymère conducteur sur des structures poreuses complexes de type mousse réticulée, feutre ou tissé, permettant de conférer aux dites structures une conductivité électrique continue, propre à rendre possible leur métallisation, par voie électrolytique, sur l'ensemble de leur surface développée, et comprenant les étapes suivantes :
a) pré-traitement oxydant de la structure de base,
b) rinçage, éventuellement complété par égouttage et séchage,
c) dépôt d'un monomère,
d) égouttage,
e) polymérisation du monomère, par oxydation-dopage, en un polymère électriquement conducteur,
f) rinçage, et égouttage,
g) séchage éventuel,
ces diverses étapes étant réalisées les unes après les autres à travers le volume entier de la structure à traiter, **caractérisé en ce que** lesdites structures se présentent sous n'importe quelles épaisseurs et formes, notamment sous forme de blocs ou rouleaux - sans opération de déroulement -, et qu'elles sont imprégnées à travers leur volume par les diverses solutions de traitement, l'étape de pré-traitement oxydant est effectuée au moyen d'une solution de permanganate de potassium de température comprise entre 20 et 35°C.

2. Procédé selon la revendication 1, **caractérisé en ce que** le monomère déposé est du pyrrole, du furane, de l'aniline, du thiophène ou certains de leurs dérivés, et notamment les monomères fonctionnalisés.

3. Procédé selon l'une des revendications 1 et 2, **caractérisé en ce que** le monomère déposé est le pyrrole, et le polymère conducteur correspondant formé par oxydation du pyrrole, le polypyrrole.

4. Procédé selon l'une des revendications 1 et 3, **caractérisé en ce que** le pyrrole est mis en solution dans de l'eau additionnée de potasse, de pH supérieur à 10.

5. Procédé selon la revendication 1, **caractérisé en ce que**, dans le cas de traitement de bloc de mousse réticulée, celui-ci est découpé après traitement dans les formes désirées, et notamment en feuilles ou bandes.

6. Procédé selon l'une des revendications 1 et 5, **caractérisé en ce que** le décollement des spires de la bande constituant le rouleau, met à jour, en surfaces de bande, des portions de fils, fibres ou mailles non revêtues de polymère conducteur et / ou plus faiblement revêtues que ne le sont les portions de surfaces des fils, fibres ou mailles n'affleurant pas les surfaces de la bande, ce qui permet de limiter les effets de pointes lors de la métallisation électrolytique ultérieure, et d'obtenir ainsi une meilleure répartition du dépôt métallique au sein de la structure, des faces jusqu'au coeur de celle-ci.

7. Procédé selon l'une des revendications 1 et 5, **caractérisé en ce que** la découpe des blocs traités de mousse en bande, met à jour, en surfaces de bande, des sections de mailles non revêtues de polymère conducteur, ce qui permet de limiter les effets de pointes lors de la métallisation électrolytique ultérieure, et d'obtenir ainsi une meilleure répartition du dépôt métallique au sein de la structure, des faces jusqu'au coeur de celle-ci.

8. Procédé selon l'une des revendications 1 à 7, **caractérisé en ce que** les structures sont ensuite métallisées par dépôts de cuivre, nickel, fer, chrome, zinc, aluminium, plomb, étain, or, platine ou tout autre métal de la mine du platine, ou par dépôts d'alliages, mélanges ou superpositions de deux quelconques au moins de ces métaux.

## Claims

1. A process for the chemical deposition of a conductive polymer on complex porous structures of the cross-linked foam, nonwoven or woven fabric type, enabling said structures to be rendered continuously electrically conductive, thereby enabling their electrolytic metallisation over the entire available surface area, and including the following steps:
a) oxidizing pre-treatment of the basic structure,
b) washing, optionally followed by draining and drying,
c) depositing a monomer,
d) draining,
e) polymerizing the monomer, by oxidation/doping, to form an electrically conductive polymer,
f) washing and draining,
g) optionally drying,
these various steps being performed one after the other throughout the volume of the structure to be treated, **characterized in that** said structures are present in any thickness and shape, in particular in the form of blocks or rolls, in the latter case without unrolling them, and that they are impregnated throughout their entire volume by various treatment solutions, the oxidizing pre-treatment being performed using a solution of potassium permanganate at a temperature between 20°C and 35°C.

2. A process according to Claim 1, **characterized in that** the deposited monomer is pyrrole, furan, aniline, thiophen or a derivative thereof and in particular a functionalised monomer.

3. A process according to any of Claims 1 and 2, **characterized in that** the deposited monomer is pyrrole and the corresponding conductive polymer, formed by oxidation of the pyrrole, is polypyrrole.

4. A process according to any of Claims 1 and 3, **characterized in that** the pyrrole is in solution in water to which potash has been added, which solution has a pH greater than 10.

5. A process according to Claim 1, **characterized in that** to treat a block of cross-linked foam the block is cut into the required shapes, in particular into sheets or strips, after treatment.

6. A process according to any of Claims 1 and 5, **characterized in that** pulling apart turns of a strip making up a roll reveals, at the surface of the strip, portions of threads, fibers or meshes which are not coated with conductive polymer and/or are coated to a lesser extent than the portions of thread, fibers or meshes which are not flush with the surfaces of the strip, which limit point effects during later electrolytic metallisation, and thus achieves a better distribution of the metallic deposit in the interior of the structure, from the surfaces to the core of the structure.

7. A process according to any of Claims 1 and 5, **characterized in that** cutting blocks of treated foam into strips reveals, at the surface of the strip, sections of meshes which are not coated with conductive polymer, which limits the point effects during later electrolytic metallisation, and thus achieves a better distribution of the metallic deposit in the interior of the structure, from the surfaces to the core of the structure.

8. A process according to any of claims 1 to 7, **characterized in that** the structures are then metallised by depositing copper, nickel, iron, chromium, zinc, aluminum, lead, tin, gold, platinum or any other metal of the platinum mine, or by depositing alloys, mixtures or the superposition of at least any two of these metals.

## Patentansprüche

1. Verfahren zur chemischen Abscheidung eines leitenden Polymers auf komplexe poröse Strukturen nach Art eines vernetzten, verfilzten oder gewebten schaumartigen Materiales, das es gestattet, diesen Strukturen eine gleichförmige elektrische Leitfähigkeit zu geben, die dazu geeignet ist, sie auf elektrolytischem Weg auf der Gesamtheit ihrer ausgebildeten Oberfläche zu metallisieren, und das die folgenden Schritte aufweist:
a) oxidative Vorbehandlung der Grundstruktur,
b) Spülen, gegebenenfalls vervollständigt durch Entwässern und Trocknen,
c) Ablagern eines Monomers,
d) Entwässern,
e) Polymerisation des Monomers durch Oxidation-Dotieren in ein elektrisch leitendes Polymer,
f) Spülen und Entwässern,
g) gegebenenfalls Trocknen,
wobei die verschiedenen Schritte über das gesamte Volumen der zu behandelnden Struktur nacheinander ausgeführt werden, **dadurch gekennzeichnet, dass** die Strukturen in beliebigen Dicken und Formen, insbesondere in Gestalt von Blöcken oder Rollen ohne den Vorgang des Abrollens, vorliegen und dass sie über ihr gesamtes Volumen mit verschiedenen Behandlungslösungen durchtränkt sind, wobei der Schritte der oxidierenden Vorbehandlung mittels einer Kaliumpermanganatlösung mit einer Temperatur zwischen 20 und 35°C durchgeführt wird.

2. Verfahren nach Anspruch 1, **dadurch gekennzeichnet, dass** das aufgebrachte Polymer Pyrrol, Furan, Anilin, Tiophen oder bestimmte Derivate von diesen, insbesondere funktionalisierte Monomere, ist.

3. Verfahren nach einem der Ansprüche 1 und 2, **dadurch gekennzeichnet, dass** das aufgebrachte Polymer Pyrrol und das durch Oxidation von Pyrrol gebildete zugehörige leitende Polymer Polypyrrol ist.

4. Verfahren nach einem der Ansprüche 1 und 3, **dadurch gekennzeichnet, dass** das Pyrrol in Wasser mit zugesetztem Kalium bei einem pH von mehr als 10 gelöst wird.

5. Verfahren nach Anspruch 1, **dadurch gekennzeichnet, dass** im Falle des Behandelns eines Blockes von vernetztem schaumartigen Material dieses nach der Behandlung in die gewünschten Formen und insbesondere in Platten und Bänder geschnitten wird.

6. Verfahren nach einem der Ansprüche 1 und 5, **dadurch gekennzeichnet, dass** das Ablösen der Windungen des die Rolle bildenden Bandes an den Oberflächen des Bandes Bereiche von Fäden, Fasern oder Maschen freilegt, die nicht und/oder nur verhältnismäßig schwach mit dem Polymerleiter belegt sind, was die Bereiche der Oberflächen der Fäden, Fasern oder Maschen sind, die nicht an den Oberflächen des Bandes zu Tage treten, was es gestattet, den Einfluß der Spitzen bei der nachfolgenden elektrolytischen Metallisierung zu begrenzen und somit eine bessere Verteilung der metallischen Ablagerung im Inneren von den Außenseiten bis in den Kern zu erhalten.

7. Verfahren nach einem der Ansprüche 1 und 5, **dadurch gekennzeichnet, dass** das Schneiden der Blöcke von behandeltem schaumartigen Material in Bänder an den Oberflächen des Bandes Bereiche von Maschen freilegt, die nicht mit dem Polymerleiter belegt sind, was es gestattet, den Einfluß der Spitzen bei der nachfolgenden elektrolytischen Metallisierung zu begrenzen und somit eine bessere Verteilung der metallischen Ablagerung im Inneren von den Außenseiten bis in den Kern zu erhalten.

8. Verfahren nach einem der Ansprüche 1 bis 7, **dadurch gekennzeichnet, dass** die Strukturen anschließend durch Ablagerungen von Kupfer, Nickel, Eisen, Chrom, Zink, Aluminium, Blei, Zinn oder Platin oder eines anderen mit Platin auftretenden Metalles oder durch Ablagerungen von Legierungen, Mischungen oder Überlagerungen zweier beliebiger aus diesen Metallen metallisiert werden.
